# EUROPEAN PATENT SPECIFICATION

(11) **EP 4 153 487 B1**
(45) Date of publication and mention of the grant of the patent: **06.03.2024**
(21) Application number: 20839172.2
(22) Date of filing: 10.12.2020
(51) Int. Cl.: B64D 11/00, B64D 11/06, B60N 2/60

(54) **ANTIMICROBIAL ADHESIVE FILMS FOR AIRCRAFT FIXTURES**
ANTIMIKROBIELLE SCHUTZFOLIE FÜR FLUGZEUGVORRICHTUNGEN
FILM DE PROTECTION ANTIMICROBIEN POUR APPAREILS D'AÉRONEF

(30) Priority: 18.05.2020 US 202063026571 P
(43) Date of publication of application: 29.03.2023
(73) Proprietor: Safran Seats USA LLC, Gainesville, TX 76240 (US)
(72) Inventor: REALYVAZQUEZ GUEVARA, Paula Rebeca, Gainesville, Texas 76240 (US); BERMÚDEZ OCHOA, Cristina, Gainesville, Texas 76240 (US)
(74) Representative: Marconnet, Sébastien
(86) International application number: PCT/US2020/064381
(87) International publication number: WO 2021/236157

(56) References cited:
- CN-U- 209 022 800
- JP-A- 2009 520 076
- US-A1- 2010 104 791
- US-A1- 2012 164 202
- US-A1- 2018 027 987
- US-A1- 2019 261 781
- US-B1- 6 655 735
- US-B1- 9 505 327
- US-B1- 9 756 948
- US-B1- 9 845 034
- US-B2- 9 643 727
- LARA HUMBERTO H ET AL: "Mode of antiviral action of silver nanoparticles against HIV-1", JOURNAL OF NANOBIOTECHNOLOGY, BIOMED CENTRAL, vol. 8, no. 1, 20 January 2010 (2010-01-20), page 1, XP021068097, ISSN: 1477-3155
- DAVOUDI ZAHRA MOHAMMAD ET AL: "Hybrid Antibacterial Fabrics with Extremely High Aspect Ratio Ag/AgTCNQ Nanowires", ADVANCED FUNCTIONAL MATERIALS, vol. 24, no. 8, 1 October 2013 (2013-10-01), pages 1047-1053, XP055782273, DE ISSN: 1616-301X, DOI: 10.1002/adfm.201302368

## Description

### CROSS REFERENCE TO RELATED APPLICATIONS

This application is related to and claims priority benefits from U.S. Provisional Application Serial No. 63/026,571 ("the '571 application"), filed on May 18, 2020, entitled COVERS AND SURFACES FOR AN AIRCRAFT SEAT.

### FIELD OF THE INVENTION

The field of the invention relates to safety features, particularly antimicrobial features, for passenger seats.

### BACKGROUND

Commercial passenger aviation is an essential part of commerce, industry, and tourism, and most importantly, brings people closer together across the world. For all of these reasons, it is difficult to avoid flying even during severe regional or global emergencies. Features like directional airflow and air filtering provide significant barriers to infectious spread in commercial aviation, however, additional safeguards are warranted in this industry, as in many other forms of transportation. In particular, there is increasing interest in preventing the transmission of communicable diseases from contaminated surfaces. The conventional approach to minimizing contact spread is aggressively cleaning high touch surfaces with virucidal or antibacterial products. However, when overused, such products can be a mild irritant, and the effectiveness of this strategy depends on the thoroughness, diligence, and frequency with which routine cleaning is carried out. To that end, additional strategies for inhibiting the transmission of communicable diseases in enclosed passenger cabins are of great interest.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. An adhesive self-cleaning antimicrobial element is provided according to claim 1.
Further, a method for equipping a passenger seating assembly with an antimicrobial surface is provided according to claim 14.

According to certain embodiments of the present invention, a passenger seating assembly can include a passenger seat frame configured to attach to a floor of a passenger compartment, a passenger seat mounted to the passenger seat frame, and an exposed surface connected with the passenger seat, such as but not limited to a tray table, seat shroud, media device, armrest, cushion, frame, or any other exposed feature. The adhesive self-cleaning antimicrobial element can then be removably adhered to the exposed surface.

According to certain embodiments of the present disclosure, the adhesive self-cleaning antimicrobial element includes an adhesive layer, a polymeric supportive layer, and an antimicrobial material connected with the adhesive layer and configured to sanitize the adhesive self-cleaning antimicrobial element. The antimicrobial element can include an abrasion-resistant surface that resists abrasion or deactivation when subjected to repeated chemical sterilization, and the antimicrobial element is sized to conform to an exposed surface of a passenger seat. The adhesive self-cleaning antimicrobial element can further include a tacky inferior surface configured to allow repeated attachment and detachment of the adhesive self-cleaning antimicrobial element to the exposed surface of the passenger seat.

According to certain embodiments of the present disclosure, a method of removably adhering an adhesive self-cleaning antimicrobial element to an exposed surface of a passenger seat or within a passenger cabin can include scanning, identifying, and removing an expired adhesive self-cleaning antimicrobial element from the exposed surface prior to removably adhering a fresh self-cleaning antimicrobial element. Identifying an expired self-cleaning antimicrobial element can be achieved by printing or attaching a machine- or human-readable indicium to the adhesive self-cleaning antimicrobial element that communicates an installation date or an expiration date of the adhesive self-cleaning antimicrobial element when scanned.

### BRIEF DESCRIPTION OF THE DRAWINGS

FIG. 1 is a perspective view illustrating a passenger seating arrangement in the passenger cabin incorporating adhesive self-cleaning antimicrobial elements, in accordance with various embodiments of the present disclosure.
FIG. 2 is a rear perspective view illustrating a passenger seat as shown in FIG. 1, and incorporating adhesive self-cleaning antimicrobial elements.
FIG. 3 is a perspective view illustrating a passenger seat back and tray table incorporating an adhesive self-cleaning antimicrobial element in more detail, including machine and human readable indicia.
FIG. 4 is a side schematic view illustrating aspects of a first example of an adhesive self-cleaning antimicrobial element.
FIG. 5 is a side schematic view illustrating aspects of the second example of an adhesive self-cleaning antimicrobial element.
FIG. 6 is a high-level diagram illustrating aspects of a scanning operation for determining installation and or replacement information of an adhesive self-cleaning antimicrobial element.
FIG. 7 is a process flow diagram illustrating an example of a scanning and replacement process for use with an adhesive self-cleaning antimicrobial element, in accordance with various embodiments of the present disclosure.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The described embodiments of the invention provide an additional layer of protection for passengers in a passenger cabin environment against the transmission of communicable diseases by partly encasing high-traffic or high touch surfaces with self-cleaning antimicrobial elements. Self-cleaning antimicrobial elements can be adhered removably to surfaces in the passenger cabin where they can trap and deactivate at least a portion of bacteria or viruses that come in contact with the antimicrobial elements. When used in combination with cleaning best practices, distancing, and proper hygiene, these adhered self-cleaning antimicrobial elements further reduce the likelihood of transmission of infectious disease within the passenger cabin, or between passengers using the cabin at different times. Some embodiments of self-cleaning antimicrobial elements can include human or machine-readable indicia that provide information to an agent servicing the passenger cabin. This information can include a range of time in which the antimicrobial element is most effective at destroying bacteria or viruses, or information from which an expiration or replacement date can be readily obtained (e.g., an installation date, a replacement date, or an indicator that permits retrieval of an installation or replacement date). Thus, marked self-cleaning antimicrobial elements can be routinely removed and replaced with fresh antimicrobial elements in order to maintain efficacy.

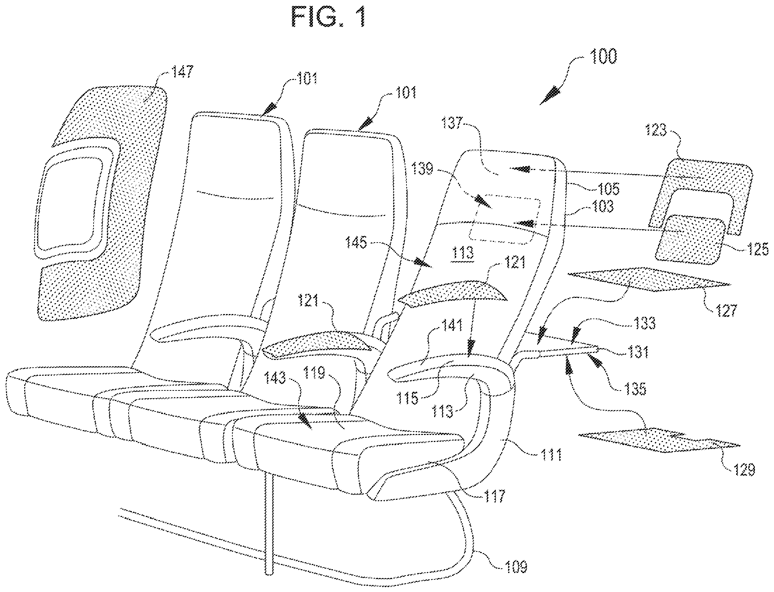

FIG. 1 is a perspective view illustrating a passenger seating arrangement 100 in a passenger cabin incorporating various adhesive self-cleaning antimicrobial elements, in accordance with embodiments of the present disclosure. Self-cleaning antimicrobial elements are shown attached to many suitable services in the seating arrangement 100, however it will be understood that self-cleaning antimicrobial elements can be attached to any other suitable surface in the passenger cabin. The example passenger seating arrangement 100 includes several passenger seats 101, each passenger seat including a seat frame 109 that supports a seat back 103, side frames or spreaders 111, armrests 113, and a seat bottom 117. The seat back 103 includes a seat back shroud 105 typically formed of a nonporous polymer or composite shell and a seat back cushion 1074 supporting a passenger. Each armrest 113 generally includes an armrest cushion 115, which can be a leather or textile covering, or can be a polymer cushion attached to the top of or partially encompassing the armrest. Either the seat frame 109 or seat back 103 may support a tray table 131 that can fold outward from the seat back. In addition, seat back shroud 105 may include and attached or embedded media device 139 that is networked for showing media such as film and TV shows, flight information, or announcements.

According to at least one embodiment of the present disclosure, each armrest 113 can include a removably adhered self-cleaning antimicrobial armrest element 121. The self-cleaning antimicrobial armrest elements 121 can be removably attached to the armrest cushion 115, or can be attached directly to or attached around portions of each armrest 113, for example, at an armrest top surface 141. The self-cleaning antimicrobial armrest elements 121 can be shaped to match the top surface 141 of each armrest so that they cover a portion of, or substantially all of, the surface that would otherwise come into contact with the hands and/or forearms of a passenger using the armrests.

According to at least one embodiment of the present disclosure, each passenger seat back 103 can include a seat back shroud antimicrobial element 123 shaped to at least partially enclose or cover the portions of the seat back shroud 105 with which a passenger might come into contact. For example, the seat back shroud antimicrobial elements 123 can be shaped to wrap around the top and/or sides of the seat back shroud 105 so that passengers touching the tops and sides of the seat back shroud when standing, sitting, or accessing storage compartments will not come into direct contact with the seat back shroud. The seat back shroud antimicrobial elements 123 can also or alternatively be shaped to cover some of or substantially all of the back portion of the seat back shroud 105 facing a passenger seated behind each passenger seat 101.

Any suitable high-touch elements of the passenger seating arrangement 100 may be covered with removably adhered self-cleaning antimicrobial elements as well, for example, a media device 139 adjacent to or inserted into the seat back shroud 105 may have a transparent media self-cleaning antimicrobial element 125 that adheres thereto and minimizes or eliminates bacteria or viruses that may be transmitted to the surface of the media device by passenger touch. By way of another example, the tray table 131 can be covered by self-cleaning antimicrobial elements as well, e.g., a tray table self-cleaning antimicrobial element 127 can be attached removably to a tray table top surface 133, or an underside self-cleaning antimicrobial element 129 can be attached removably to a tray table bottom surface 135. Additional self-cleaning antimicrobial elements can be attached to any other suitable high touch surface not explicitly shown, including cushion surfaces, such as the seat back surface 145 of the seat back cushion 107, the seat bottom surface 143 of the seat bottom cushion 119, or any suitable exposed surface of the seat frame 109 seat back shroud 105, or other suitable exposed surface within the passenger cabin. For example, according to at least one embodiment, a cabin wall self-cleaning antimicrobial element 147 may be adhered to any suitable portion of the cabin interior adjacent the seating arrangement 100, particularly portions on which passengers at the outer row might lean.

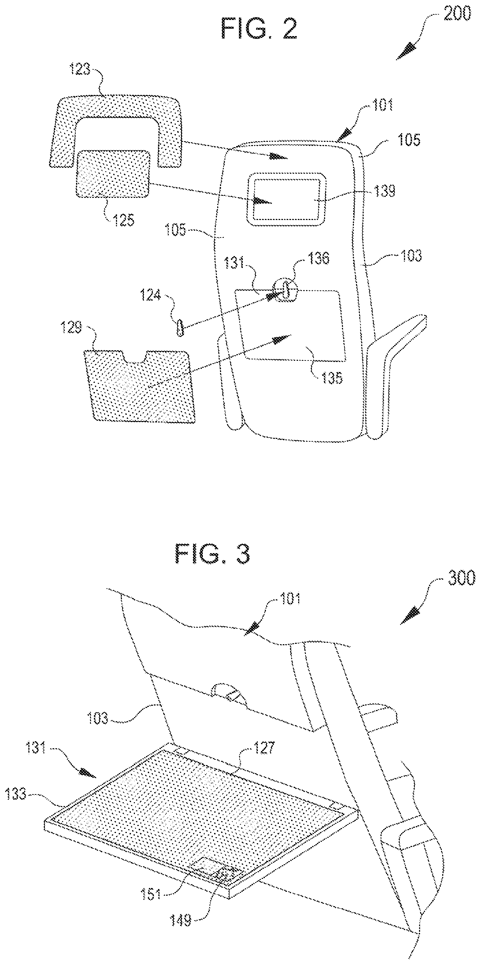

FIG. 2 is a rear perspective view 200 illustrating a passenger seat 101 as shown in FIG. 1, and incorporating adhesive self-cleaning antimicrobial elements 123, 125, and 129 in greater detail. Seat back shroud antimicrobial element 123 is removably adhered to at least a portion of the passenger seat back shroud 105, the transparent media self-cleaning antimicrobial element 125 is adhered removably to the surface of the media device 139, and an underside self-cleaning antimicrobial element 129 is adhered to the bottom surface 135 of the tray table 131 so that, when the tray table 131 is stowed, the exposed portion of the tray table is protected. Adhesive self-cleaning antimicrobial elements can be used not only on seating or supportive surfaces within the passenger cabin, but also to protect passengers from transmission by touching various switches, buttons, or retention devices within the passenger cabin. For example a switch covering adhesive self-cleaning antimicrobial element 124 can be attached to partially or fully encase the tray table locking mechanism 136. Similar small profile adhesive self-cleaning antimicrobial elements can be shaped for and attached to any suitable button or switch within the passenger cabin that may be actuated by a passenger or flight staff, such as reclining switches, communication switches or call buttons, light switches, air outlets, or the like.

FIG. 3 is a perspective view 300 illustrating a passenger seat 101 with a passenger seat back 103 and tray table 131 incorporating an adhesive self-cleaning antimicrobial element 127 in more detail, including machine and human readable indicia 149 and 151, respectively. In this example, the adhesive self-cleaning antimicrobial element 127 is adhered removably to the top surface 133 of the tray table 131, where the antimicrobial element can deactivate pathogens on the tray table. The machine-readable indicium 149 can be used to store information about the installation or expiration dates of the adhesive self-cleaning antimicrobial element 127, or other useful information. The human readable indicium 151 can be used for the same purpose as the machine-readable indicium 149, or may include other text or symbols for presentation to crew or to passengers. For example, the human readable indicium 151 may include an explanation for the benefit of the passengers describing the purpose of the adhesive self-cleaning antimicrobial element 127, or other elements within the passenger cabin that may be adhered to parts of the passenger seats 101. According to some embodiments, only a subset of the adhesive self-cleaning antimicrobial elements within a passenger cabin may include human or machine-readable indicium, or in some cases such markers may be included on all such antimicrobial elements. Where present, the human or machine-readable indicia 151, 149 may be used by crew or maintenance staff to identify adhesive self-cleaning antimicrobial elements that have exhausted a service life and require replacement. Alternatively, a replacement schedule can be maintained without reliance on markings on the antimicrobial elements. According to some embodiments, the machine-readable indicium 149 can be replaced with any suitable machine-readable component, such as but not limited to a barcode or QR code, a color code, machine-readable text or numbers, an RFID chip, or comparable component.

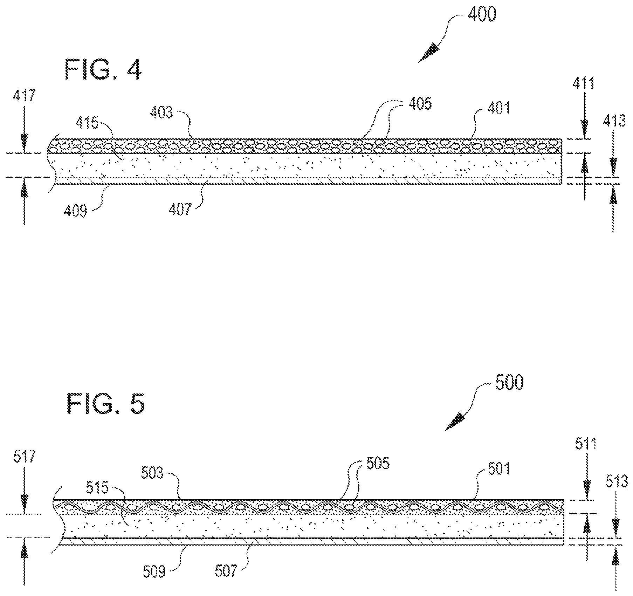

FIG. 4 is a side schematic view illustrating aspects of a first example of an adhesive self-cleaning antimicrobial element 400, which may be used as any of the aforementioned self-cleaning antimicrobial elements described above, in accordance with various embodiments of the present disclosure. The adhesive self-cleaning antimicrobial element 400 includes an active layer 403 containing a mixture of one or more types of particles with antiviral or antibacterial activity 405 that are generally distributed throughout the layer and accessible at a top surface 401 of the self-cleaning antimicrobial element. An adhesive layer 407 is attached with the active layer 403 and forms a bottom surface 409 of the adhesive self-cleaning antimicrobial element 400 that permits it to adhere to a surface. The bottom surface 409 can be a tacky, releasable adhesive configured to allow for repeated attachment and detachment of the adhesive, self-cleaning antimicrobial element from a surface. According to some embodiments, a supportive intermediate layer 415 can be layered between the active layer 403 and the adhesive layer 407, which can be any suitable polymeric film. According to various embodiments, the active layer 403 can have a thickness 411 from 10 microns to 20 microns, preferably from 10 to 15 microns. A total thickness of the adhesive self-cleaning antimicrobial element 400 can be from about 110-150 microns. A support layer thickness 417 and an adhesive layer thickness 413, combined, can range from about 100 microns to about 140 microns, or can be less than 100 microns.

According to some embodiments, the active layer 403 can be surface-coated with particles with antiviral and/or antibacterial activity 405 instead of, or in addition to, embedding particles in the active layer. The coating can be achieved by spray coating, electrochemical deposition, evaporative deposition and heat-curing, or any other suitable process for fixing antiviral and/or antibacterial nanoparticles 405 on a surface. According to at least one embodiment, the antiviral and/or antibacterial nanoparticles 405 can be metal or metal oxide, such as but not limited to silver, copper, calcium, magnesium, or other suitable antimicrobial metallic elements, or suitable antimicrobial compounds thereof, such as but not limited to zinc oxide, magnesium oxide, cuprous oxide, silver sulfide, silver nitrate, silver oxide, calcium oxide, or other suitable metallic compounds. According to various embodiments, two or more different antibacterial and/or antiviral elements or compounds can be present as nanoparticles or coating constituents in the active layer 403. According to at least one embodiment, the active layer 403 can be formed of a matrix (e.g., polymer or composite) in which particles with antimicrobial activity 405 are embedded or on which the antimicrobial particles are coated, or both. According to various other embodiments, the active layer 403 can be formed entirely of a mixture of particles with antimicrobial activity 405, of one or more distinct type, which are deposited directly on the adhesive layer 407 to form the active layer. According to some further embodiments, the active layer 403 can be formed by spray- or deposition-coating the adhesive layer 407 with a mixture of one or more types of particles with antimicrobial activity in combination with a fixative or polymer.

The active layer 403 is preferably resistant to abrasion and chemical attack, such that routine use, cleaning, and disinfecting of the self-cleaning antimicrobial element 400 does not result in the removal of particles with antimicrobial activity 405 by abrasion, or by dissolving any portion of the active layer.

FIG. 5 is a side schematic view illustrating aspects of the second example of an adhesive self-cleaning antimicrobial element 500, which may be used as any of the aforementioned self-cleaning antimicrobial elements described above, in accordance with various embodiments of the present disclosure. The adhesive self-cleaning antimicrobial element 500 includes an active layer 503 containing a mixture of one or more types of antiviral or antibacterial fibers 505, or fibers coated in antimicrobial or antiviral particles, that are generally distributed throughout the layer and accessible at a top surface 501 of the self-cleaning antimicrobial element. An adhesive layer 507 is attached to the active layer 503 and forms a bottom surface 509 of the adhesive self-cleaning antimicrobial element 500 that permits it to adhere to a surface. The bottom surface 509 can be a tacky, releasable adhesive configured to allow for repeated attachment and detachment of the adhesive, self-cleaning antimicrobial element from a surface. According to some embodiments, the efficacy of the antiviral and/or antibacterial fibers 505 can be maintained prior to installation of the adhesive self-cleaning antimicrobial element 500. According to some embodiments, a supportive intermediate layer 515 can be layered between the active layer 503 and the adhesive layer 507, which can be any suitable polymeric film. According to various embodiments, the active layer 503 can have a thickness 511 from 10 microns to 20 microns, preferably from 10 to 15 microns. A total thickness of the adhesive self-cleaning antimicrobial element 500 can be from about 110-150 microns. A support layer thickness 517 and an adhesive layer thickness 513, combined, can range from about 100 microns to about 140 microns, or can be less than 100 microns.

According to some embodiments, the active layer 503 can be formed by surface-coating a mesh or textile of antiviral and/or antibacterial fibers 505 with an abrasion-resistant material instead of, or in addition to, embedding fibers in a matrix. The coating can be achieved by spray coating, electrochemical deposition, evaporative deposition and heat-curing, or any other suitable process for fixing antiviral and/or antibacterial fibers 505 on a surface. According to at least one embodiment, the antiviral and/or antibacterial fibers 505 can be a grid, a woven, or a nonwoven formed from filaments of antimicrobial metal, or can be fibers of any suitable material (e.g., a cotton or other suitable cellulosic fiber, a polyester or nylon fiber, or other suitable fiber) treated with a surface coating of an antimicrobial elemental metal or metal oxide, such as but not limited to silver, copper, calcium, magnesium, or other suitable antimicrobial metallic elements, or suitable antimicrobial compounds thereof, such as but not limited to zinc oxide, magnesium oxide, cuprous oxide, silver sulfide, silver nitrate, silver oxide, calcium oxide, or other suitable metallic compounds. According to various embodiments, two or more different antibacterial and/or antiviral elements or compounds can be present as interwoven or interlaid fibers in the active layer 503. According to at least one embodiment, the active layer 503 can be formed of a matrix (e.g., polymer or composite) in which antimicrobial fibers 505 are embedded. According to various other embodiments, the active layer 503 can be formed entirely of a mixture of antimicrobial fibers 505, of one or more distinct type, which are deposited or adhered directly on the adhesive layer 507 to form the active layer. According to some further embodiments, the active layer 503 can be formed by adhering one or more types of antimicrobial fibers 505 to the adhesive layer 507 in combination with a fixative or polymer.

The active layer 503 is preferably resistant to abrasion and chemical attack, such that routine use, cleaning, and disinfecting of the self-cleaning antimicrobial element 500 does not result in the removal of antimicrobial fibers 505 by abrasion, or by dissolving any portion of the active layer.

Structural elements of the seats (e.g. passenger seat 101, tray table 131, seat frame 109), as well as any intervening structural elements or attachment elements therein, may be formed of materials including but not limited to aluminum, stainless steel, aramid fibers, polycarbonate, polypropylene, other metallic materials, composite materials, or other similar materials.

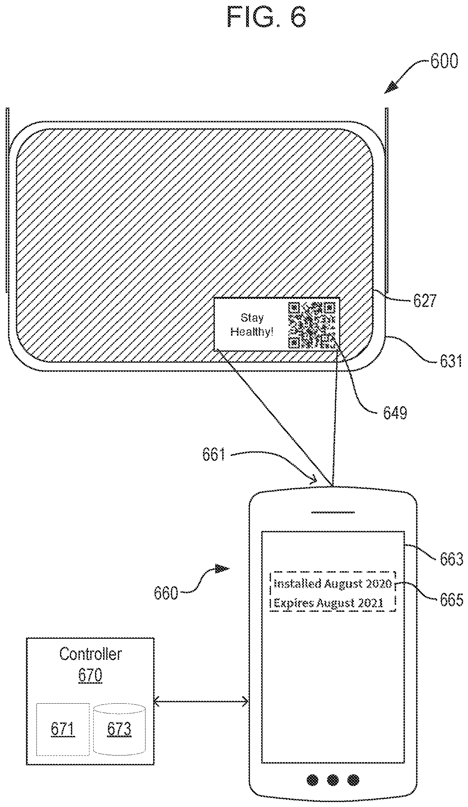

Antiviral or antibacterial materials can often degrade over time due to gradual wear during cleaning or routine use, due to oxidation of the antimicrobial materials, or other factors. Unlike built-in or textile antimicrobial surfaces or materials, the self-cleaning antimicrobial elements described herein can be easily replaced, and therefore can be used for a finite period of time reflecting an optimal service life. FIG. 6 is a high-level diagram illustrating aspects of a scanning operation 600 for determining installation and or replacement information of a removably adhesive self-cleaning antimicrobial element 627. The self-cleaning antimicrobial element 627 is shown in combination with a tray table 631, though it will be understood that the features described herein can be reflected in self-cleaning antimicrobial elements attached to any suitable surface in a passenger cabin.

In accordance with various embodiments, the self-cleaning antimicrobial element 627 can include a machine-readable indicium 649 containing useful information for facilitating the timely replacement of the antimicrobial element. As described above, the machine-readable indicium 649 may be any suitable symbol or code that is computer-readable, including but not limited to a bar code, QR code, color code, or even machine-readable text or numbers that can be obtained by visual scanning. In some embodiments, the machine-readable indicium 649 can be replaced with an RFID chip that can transmit machine-readable information in response to a signal.

In use, an agent or technician may use a scanning device 660 equipped with a suitable scanner 661 (e.g., an RFID scanner, an IR scanner, a barcode- or QR-code reader, or a camera in conjunction with image-identification software running on the scanning device). When positioned to scan the machine-readable indicium 649, the scanning device 660 can obtain data from scanning the indicium and display the obtained information 665 in a display 663 of the scanning device for presentation to the agent. For example, the indicium 649 may include information about the installation and/or recommended replacement date for the self-cleaning antimicrobial element 627, which can then be displayed by the scanning device 660. According to some embodiments, the indicium 649 may include reference information about the particular self-cleaning antimicrobial element 627, from which the scanning device 660 can obtain information about the self-cleaning antimicrobial element by querying a networked controller 670, i.e., a computer system having at least one processor 671 and a memory device 673 or database that stores service information related to the antimicrobial element 627, including but not limited to an installation date, replacement date, or other information.

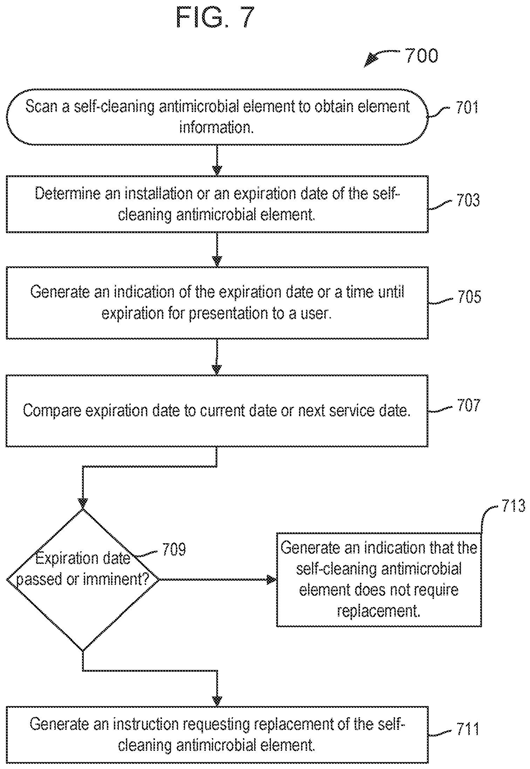

FIG. 7 is a process flow diagram illustrating an example of a scanning and replacement process 700 for use with an adhesive self-cleaning antimicrobial element, in accordance with various embodiments of the present disclosure. First, at 701, an agent or technician can scan an adhesive self-cleaning antimicrobial element that is removably adhered to a surface in a passenger cabin to obtain information stored by one or more indicia or RFID chips of the adhesive self-cleaning antimicrobial element, via a scanning device. Based on the obtained information, an installation date or a recommended replacement or expiration date of the adhesive self-cleaning antimicrobial element can be determined, at 703. According to some embodiments, the information can be stored directly on the self-cleaning antimicrobial element, e.g. by machine-readable markings, or may be stored in and obtained from a database accessible by the scanning device based on information, such as an identifier, obtained by scanning the self-cleaning antimicrobial element.

Next, at 705, the scanning device can indicate a recommended replacement date to the agent, and at 707, may compare the identified expiration / replacement date to the current date or to a next service date. The system at 709 determines, based on the comparison, whether the replacement date has passed or is imminent, e.g., within a predefined time period of the current date or a next service date. In the event that the expiration date is not passed or imminent, the system can generate an indication that the self-cleaning antimicrobial element does not require imminent replacement, at 713. Conversely, if the replacement date has passed or is imminent, the system can generate an instruction for presentation to a user (e.g., an agent or technician) requesting replacement of the self-cleaning antimicrobial element.

The process 700 (or any other processes described herein, or variations, and/or combinations thereof) may be automated and performed mechanically under the control of one or more computer systems configured with executable instructions and implemented as code (e.g., executable instructions, one or more computer programs, or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory. In some embodiments, aspects of process 700 may be performed manually.

Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. An adhesive self-cleaning antimicrobial element (627), comprising:
an adhesive layer (407, 507);
a polymeric support layer connected with the adhesive layer;
an antimicrobial layer connected with the polymeric support layer and configured to sanitize the adhesive self-cleaning antimicrobial element, wherein the antimicrobial layer comprises an antimicrobial material, and wherein the adhesive self-cleaning antimicrobial element is sized to conform to an exposed surface of a passenger seat (101) ; and
**characterized in that** the adhesive self-cleaning antimicrobial element comprises a machine-readable indicium (649) containing information (665) indicative of an installation date or an effectiveness date of the antimicrobial material.

2. The adhesive self-cleaning antimicrobial element of claim 1, **characterized in that** the adhesive layer comprises a tacky inferior surface configured to allow repeated attachment and detachment of the adhesive self-cleaning antimicrobial element to the exposed surface of the passenger seat (101).

3. The adhesive self-cleaning antimicrobial element of claim 1 or 2, **characterized in that** the antimicrobial material comprises a virucidal metallic or metallic oxide mesh.

4. The adhesive self-cleaning antimicrobial element of any of the claims 1 to 3, **characterized in that** the antimicrobial material comprises virucidal metallic or metallic oxide particles.

5. The adhesive self-cleaning antimicrobial element of any of the claims 1 to 4, **characterized in that** the antimicrobial material comprises silver nanoparticles.

6. A passenger seating assembly, **characterized in that** it comprises:
a passenger seat (101) frame configured to attach to a floor of a passenger compartment;
a passenger seat mounted to the passenger seat frame;
an exposed surface connected with the passenger seat; and
an adhesive self-cleaning antimicrobial element (627) according to any of the preceding claims removably adhered to the exposed surface.

7. The passenger seating assembly of claim 6, **characterized in that** the adhesive layer comprises a tacky inferior surface configured to allow repeated attachment and detachment of the adhesive self-cleaning antimicrobial element.

8. The passenger seating assembly of claim 6 or 7, **characterized in that** the antimicrobial material comprises a virucidal metallic or metallic oxide mesh.

9. The passenger seating assembly of any of the claims 6 to 8, **characterized in that** the antimicrobial material comprises virucidal metallic nanoparticles embedded in an abrasion-resistant surface.

10. The passenger seating assembly of any of the claims 6 to 9, **characterized in that** the antimicrobial material is antiviral and antibacterial.

11. The passenger seating assembly of any of the claims 6 to 10, **characterized in that** the antimicrobial material comprises silver nanoparticles embedded in an abrasion-resistant surface.

12. The passenger seating assembly of any one of the claims 6 to 11, **characterized in that** the exposed surface to which the adhesive self-cleaning antimicrobial element is removably adhered is an armrest (113) of the passenger seat.

13. The passenger seating assembly of any one of the claims 6 to 11, **characterized in that** the exposed surface to which the adhesive self-cleaning antimicrobial element is removably adhered is a tray table (131, 631).

14. A method for equipping a passenger seating assembly with an antimicrobial surface, the method **characterized in that** it comprises:
removably adhering an adhesive self-cleaning antimicrobial element (627) an exposed surface connected with the passenger seat (101), wherein the adhesive self-cleaning antimicrobial element comprises an adhesive layer (407, 507), a polymeric support layer connected with the adhesive layer, and an antimicrobial layer comprising an antimicrobial material connected with the polymeric support layer and configured to sanitize the adhesive self-cleaning antimicrobial element; and
printing or attaching a machine-readable indicium (649) to the adhesive self-cleaning antimicrobial element that communicates one of an installation date or an expiration date of the adhesive self-cleaning antimicrobial element.

15. The method of claim 14, **characterized in that** it further comprises:
removing an expired adhesive self-cleaning antimicrobial element from the exposed surface connected with the passenger seat prior to removably attaching the adhesive self-cleaning antimicrobial element.

## Patentansprüche

1. Selbstreinigendes antimikrobielles Klebeelement (627), umfassend:
eine Klebeschicht (407, 507);
eine Polymerträgerschicht, die mit der Klebeschicht verbunden ist;
eine antimikrobielle Schicht, die mit der Polymerträgerschicht verbunden und dazu eingerichtet ist, das selbstreinigende antimikrobielle Klebeelement desinfiziert, wobei die antimikrobielle Schicht ein antimikrobielles Material umfasst und das selbstreinigende antimikrobielle Klebeelement dazu dimensioniert ist, sich an eine freiliegende Oberfläche eines Passagiersitzes (101) anzupassen; und
**dadurch gekennzeichnet, dass** das selbstreinigende antimikrobielle Klebeelement eine maschinenlesbare Anzeige (649) aufweist, die Informationen (665) enthält, die ein Installationsdatum oder ein Wirksamkeitsdatum des antimikrobiellen Materials angeben.

2. Selbstreinigendes, antimikrobielles Klebeelement nach Anspruch 1, **dadurch gekennzeichnet, dass** die Klebeschicht eine klebrige Unterseite aufweist, die dazu eingerichtet ist, ein wiederholtes Anbringen und Lösen des selbstreinigenden antimikrobiellen Klebeelements an der freiliegenden Oberfläche des Passagiersitzes (101) zu ermöglichen.

3. Selbstreinigendes antimikrobielles Klebeelement nach Anspruch 1 oder 2, **dadurch gekennzeichnet, dass** das antimikrobielle Material ein viruzides Metall- oder Metalloxidnetz umfasst.

4. Selbstreinigendes antimikrobielles Klebeelement nach einem der Ansprüche 1 bis 3, **dadurch gekennzeichnet, dass** das antimikrobielle Material viruzide Metall- oder Metalloxidpartikel umfasst.

5. Selbstreinigendes antimikrobielles Klebeelement nach einem der Ansprüche 1 bis 4, **dadurch gekennzeichnet, dass** das antimikrobielle Material Silbernanopartikel umfasst.

6. Passagiersitzanordnung, **dadurch gekennzeichnet, dass** sie umfasst:
einen Passagiersitzrahmen (101), der dazu eingerichtet ist, am Boden eines Passagierraums befestigt werden kann;
einen am Passagiersitzrahmen montierten Passagiersitz;
eine freiliegende Oberfläche, die mit dem Passagiersitz verbunden ist; und
ein selbstreinigendes antimikrobielles Klebeelement (627) nach einem der vorhergehenden Ansprüche, das entfernbar an der freiliegenden Oberfläche befestigt ist.

7. Passagiersitzanordnung nach Anspruch 6, **dadurch gekennzeichnet, dass** die Klebeschicht eine klebrige Unterseite umfasst, die dazu eingerichtet ist, ein wiederholtes Anbringen und Lösen des selbstreinigenden, antimikrobiellen Klebeelements ermöglicht.

8. Passagiersitzanordnung nach Anspruch 6 oder 7, **dadurch gekennzeichnet, dass** das antimikrobielle Material ein viruzides Metall- oder Metalloxidnetz umfasst.

9. Passagiersitzanordnung nach einem der Ansprüche 6 bis 8, **dadurch gekennzeichnet, dass** das antimikrobielle Material viruzide Metallnanopartikel umfasst, die in eine abriebfeste Oberfläche eingebettet sind.

10. Passagiersitzanordnung nach einem der Ansprüche 6 bis 9, **dadurch gekennzeichnet, dass** das antimikrobielle Material antiviral und antibakteriell ist.

11. Passagiersitzanordnung nach einem der Ansprüche 6 bis 10, **dadurch gekennzeichnet, dass** das antimikrobielle Material Silbernanopartikel umfasst, die in eine abriebfeste Oberfläche eingebettet sind.

12. Passagiersitzanordnung nach einem der Ansprüche 6 bis 11, **dadurch gekennzeichnet, dass** die freiliegende Oberfläche, an der das selbstreinigende, antimikrobielle Klebeelement entfernbar befestigt ist, eine Armlehne (113) des Passagiersitzes ist.

13. Passagiersitzanordnung nach einem der Ansprüche 6 bis 11, **dadurch gekennzeichnet, dass** die freiliegende Oberfläche, an der das selbstreinigende antimikrobielle Klebeelement entfernbar befestigt ist, eine Tischplatte (131, 631) ist.

14. Verfahren zum Ausrüsten einer Passagiersitzbaugruppe mit einer antimikrobiellen Oberfläche, wobei das Verfahren **dadurch gekennzeichnet ist, dass** es umfasst:
lösbares Kleben eines selbstreinigenden antimikrobiellen Klebeelements (627) auf eine freiliegende Oberfläche, die mit dem Passagiersitz (101) verbunden ist,
wobei das selbstreinigende antimikrobielle Klebeelement eine Klebeschicht (407, 507), eine mit der Klebeschicht verbundene Polymerträgerschicht und eine antimikrobielle Schicht, die mit einem antimikrobiellen an die Polymerträgerschicht verbundenen Material versehen ist und dazu eingerichtet ist, das selbstreinigende antimikrobielle Klebeelement zu desinfizieren, umfasst; und
Drucken oder Anbringen einer maschinenlesbaren Anzeige (649) auf dem selbstreinigenden antimikrobiellen Klebeelement, die ein Installationsdatum oder ein Ablaufdatum des selbstreinigenden antimikrobiellen Klebeelements angibt.

15. Verfahren nach Anspruch 14, **dadurch gekennzeichnet, dass** es weiterhin umfasst:
Entfernen eines abgelaufenen selbstreinigenden antimikrobiellen Klebeelements von der freiliegenden, mit dem Passagiersitz verbundene Oberfläche bevor das selbstreinigende antimikrobielle Klebeelement abnehmbar befestigt wird.

## Revendications

1. Élément antimicrobien autonettoyant adhésif (627), comprenant :
une couche adhésive (407, 507) ;
une couche de support polymère reliée à la couche adhésive ;
une couche antimicrobienne reliée à la couche de support polymère et conçue pour désinfecter l'élément antimicrobien autonettoyant adhésif, la couche antimicrobienne comprenant un matériau antimicrobien, et l'élément antimicrobien autonettoyant adhésif étant dimensionné pour s'adapter à une surface exposée d'un siège de passager (101) ; et
**caractérisé en ce que** l'élément antimicrobien autonettoyant adhésif présente une indication (649), lisible par machine, qui contient des informations (665) indiquant une date d'installation ou une date d'efficacité du matériau antimicrobien.

2. Élément antimicrobien autonettoyant adhésif selon la revendication 1, **caractérisé en ce que** la couche adhésive comprend une surface inférieure collante conçue pour permettre une fixation et un détachement répétés de l'élément antimicrobien autonettoyant adhésif à la surface exposée du siège de passager (101).

3. Élément antimicrobien autonettoyant adhésif selon la revendication 1 ou 2, **caractérisé en ce que** le matériau antimicrobien comprend un treillis métallique ou d'oxyde métallique virucide.

4. Élément antimicrobien autonettoyant adhésif selon l'une quelconque des revendications 1 à 3, **caractérisé en ce que** le matériau antimicrobien comprend des particules métalliques ou d'oxyde métallique virucides.

5. Élément antimicrobien autonettoyant adhésif selon l'une quelconque des revendications 1 à 4, **caractérisé en ce que** le matériau antimicrobien comprend des nanoparticules d'argent.

6. Ensemble de siège de passager, **caractérisé en ce qu'**il comprend :
un cadre pour siège de passager (101) conçu pour se fixer à un plancher d'un compartiment pour passagers ;
un siège de passager monté sur le cadre pour siège de passager ;
une surface exposée reliée au siège de passager ; et
un élément antimicrobien autonettoyant adhésif (627) selon l'une quelconque des revendications précédentes, collé de manière amovible à la surface exposée.

7. Ensemble de siège de passager selon la revendication 6, **caractérisé en ce que** la couche adhésive comprend une surface inférieure collante conçue pour permettre une fixation et un détachement répétés de l'élément antimicrobien autonettoyant adhésif.

8. Ensemble de siège de passager selon la revendication 6 ou 7, **caractérisé en ce que** le matériau antimicrobien comprend un treillis métallique ou d'oxyde métallique virucide.

9. Ensemble de siège de passager selon l'une quelconque des revendications 6 à 8, **caractérisé en ce que** le matériau antimicrobien comprend des nanoparticules métalliques virucides noyées dans une surface résistante à l'abrasion.

10. Ensemble de siège de passager selon l'une quelconque des revendications 6 à 9, **caractérisé en ce que** le matériau antimicrobien est antiviral et antibactérien.

11. Ensemble de siège de passager selon l'une quelconque des revendications 6 à 10, **caractérisé en ce que** le matériau antimicrobien comprend des nanoparticules d'argent incorporées dans une surface résistante à l'abrasion.

12. Ensemble de siège de passager selon l'une quelconque des revendications 6 à 11, **caractérisé en ce que** la surface exposée à laquelle l'élément antimicrobien autonettoyant adhésif est collé de manière amovible est un accoudoir (113) du siège de passager.

13. Ensemble de siège de passager selon l'une quelconque des revendications 6 à 11, **caractérisé en ce que** la surface exposée à laquelle l'élément antimicrobien autonettoyant adhésif est collé de manière amovible est une tablette (131, 631) .

14. Procédé permettant d'équiper un ensemble de siège de passager d'une surface antimicrobienne, le procédé étant **caractérisé en ce qu'**il comprend les étapes suivantes :
coller de manière amovible un élément antimicrobien autonettoyant adhésif (627) à une surface exposée reliée au siège de passager (101), l'élément antimicrobien autonettoyant adhésif comprenant une couche adhésive (407, 507), une couche de support polymère reliée à la couche adhésive, et une couche antimicrobienne pourvue d'un matériau antimicrobien reliée à la couche de support polymère et conçue pour désinfecter l'élément antimicrobien autonettoyant adhésif ; et
imprimer ou fixer une indication (649), lisible par machine, sur l'élément antimicrobien autonettoyant adhésif qui indique une date d'installation ou une date d'expiration de l'élément antimicrobien autonettoyant adhésif.

15. Procédé selon la revendication 14, **caractérisé en ce qu'**il comprend en outre l'étape suivante :
retirer un élément antimicrobien autonettoyant adhésif périmé de la surface exposée reliée au siège de passager avant de fixer de manière amovible l'élément antimicrobien autonettoyant adhésif.
